# EUROPÄISCHE PATENTSCHRIFT

(11) **EP 0 388 525 B1**
(45) Veröffentlichungstag und Bekanntmachung des Hinweises auf die Patenterteilung: **03.03.1993**
(21) Anmeldenummer: 89123104.5
(22) Anmeldetag: 14.12.1989
(51) Int. Cl.: B60G 17/04, F04B 39/00, F04B 39/06

(54) **Vorrichtung zur Kühlung und Geräuschdämpfung einer Druckluftkompressoreinheit**
Cooling and noise damping device for a pressurised air compressor unit
Dispositif pour le refroidissement et l'insonorisation d'une unité de compresseur d'air pressurisé

(30) Priorität: 23.03.1989 DE 3909563
(43) Veröffentlichungstag der Anmeldung: 26.09.1990
(73) Patentinhaber: Dr.Ing.h.c. F. Porsche Aktiengesellschaft, 70435 Stuttgart (DE)
(72) Erfinder: Häussler, Harald, D-7251 Friolzheim (DE)

(56) Entgegenhaltungen:
- DE-A- 2 804 653
- DE-U- 1 809 941
- US-A- 3 830 596

## Beschreibung

Die Erfindung bezieht sich auf eine Vorrichtung nach dem Oberbegriff des Anspruchs 1.

Aus der **DE-A 28 04 653** ist eine Vorrichtung zur Kühlung und Geräuschdämpfung von Kompressoren und Vakuumpumpen für eine stationäre Anlage bekannt, bei der die Aggregate in einem mit Wasser gefüllten geschlossenen Behälter angeordnet sind, der einen äußeren Kühler aufweist. Eine Schalldämmung erfolgt durch eine vollständige Ummantelung des im Abstand zu den Aggregaten angeordneten Behälters mit einer schallmindernden Schicht. Eine derartige Vorrichtung dämmt nicht ausreichend die Geräusche und ist zur Anwendung in einem Kraftfahrzeug aufgrund der möglichen Bewegung der Flüssigkeit im Behälter sowie der äußeren Kühlung aus Platzgründen und wegen hoher Kosten nicht verwendbar.

Aufgabe der Erfindung ist es, eine Vorrichtung zur Kühlung und Geräuschdämmung für eine Kompressoreinheit in einem Kraftfahrzeug zu schaffen, die eine Überlastung der Aggregate durch Aufwärmung vermeidet und gleichzeitig eine verbesserte Geräuschdämmung bewirkt.

Die Aufgabe der Erfindung wird durch die Merkmale des Anspruchs 1 gelöst. Weitere vorteilhafte Merkmale beinhalten die Unteransprüche.

Mit einem Druckluftkompressor für eine Niveauregelanlage eines Kraftfahrzeugs soll ein geschwindigkeitsabhängiges Absenken des Fahrzeugs sowie ein Anheben auf ein Normalniveau bei geringen Geschwindigkeiten auch im Stop-and-Go-Verkehr möglich sein, ohne daß der Kompressor wegen Überlastung abgeschaltet wird, was einen Ausfall der Niveauregelanlage zur Folge hat.

Durch einen Wärmespeicher, der die aus einem Druckkompressor, einem Motor und einem Lufttrockner bestehende Baueinheit großflächig, insbesondere im Bereich der Funktionseinheiten, flächenhaft abdeckt, wird ein Wärmeübergang von der Einheit zu einer Aufbauwand des Fahrzeugs erzielt, an der die Einheit anliegend montiert ist. Durch die hohe Wärmespeicherfähigkeit der aus Wasser und Frostschutzmittel bestehenden Flüssigkeit im Speicher fließt in der Kompressoreinheit die entstehende Wärme durch das Temperaturgefälle zwischen der Baueinheit und dem Wärmespeicher ab. Hierbei verzögert sich die Aufwärmung des gesamten Systems und es sind deutlich mehr Schaltzyklen möglich.

Die Anordnung der Baueinheit in schallmindernden Halbschalen, welche diese Einheit umschließen, ist wärmetechnisch an und für sich relativ ungünstig, was durch den Wärmespeicher ausgeglichen wird, der flächenhaft mit der Aufbauwand in Kontakt steht und in der einen Halbschale eingebettet ist und mit dieser Halbschale zusätzlich schallmindernd wirkt.

Durch die Anordnung der beiden Halbschalen und des Wärmespeichers ist die Baueinheit rundum ganzflächig umschlossen, was einer Kapselung entspricht, die schallmindernd wirkt und der Wärmeabfuhr dient.

Ein Ausführungsbeispiel der Erfindung ist in der Zeichnung dargestellt und wird im folgenden näher beschrieben.

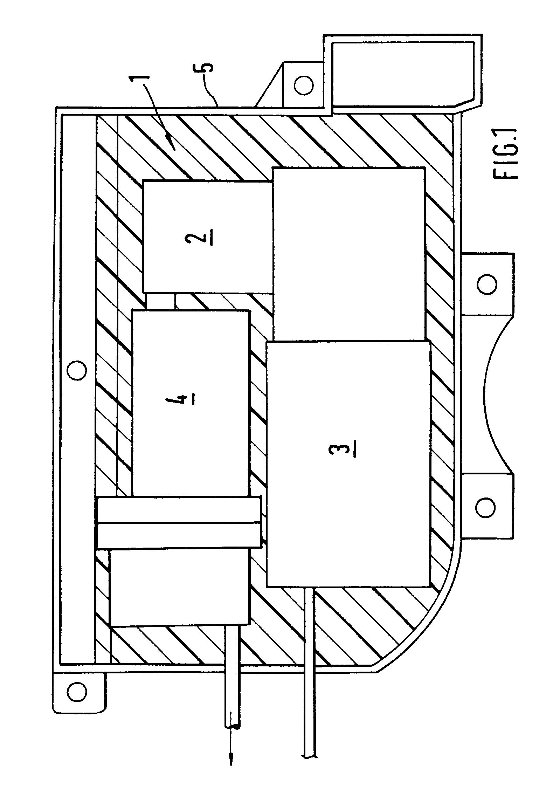

Es zeigen
Fig. 1 eine Draufsicht auf eine in einem schalenförmigen Behältnis angeordnete Kompressoreinheit, bestehend aus Druckkompressor, Motor und Lufttrockner,
Fig. 2 eine Draufsicht gemäß Fig. 1 mit einer über ein Schalldämmelement und einem Wärmespeicher abgedeckten Kompressoreinheit,
Fig. 3 einen Schnitt nach der Linie III-III der Fig. 2, und
Fig. 4 einen Schnitt nach der Linie IV-IV der Fig. 3.

Die Vorrichtung ist in einem Kraftfahrzeug eingebaut und umfaßt im wesentlichen eine Kompressoreinheit 1, bestehend aus einem Druckluftkompressor 2 für eine Energieversorgung einer pneumatischen Niveauregelanlage, die nicht näher gezeigt ist. Mit dem Kompressor 2 ist ein Elektromotor 3 und ein Lufttrockner 4 verbunden.

Diese Einheit 1 ist in einem schalenförmigen Behältnis 5 angeordnet und über ein schallminderndes unteres Element 6 zum Boden 7 des Behältnisses 5 hin elastisch abgestützt. Das Element 6 ist als Halbschale ausgeführt und umgibt die Einheit bis zu einer Ebene X-X allseitig. Diese Ebene X-X verläuft etwa in einer Mittelquerebene der Aggregate 3 und 4. Ein weiteres schallminderndes oberes und als Halbschale ausgeführtes Element 8 schließt sich lückenlos an das untere Halbschalen-Element 6 an und umgibt alle Aggregate 2, 3 und 4.

Die Kompressoreinheit 1 ist mit ihrer im Behältnis 5 freiliegenden Seite von einem Wärmespeicher 9 abgedeckt, der in einem Ausschnitt 10 des oberen Elements 8 eingebettet gehalten ist.

Die Halbschalen der schallmindernden Elemente 6 und 8 sowie der Wärmespeicher sind den Konturen der Gehäuse der Pumpe 2, des Motors 3 und des Lufttrockners 4 weitestgehend angepasst, so daß insbesondere der Wärmespeicher 9 einen unmittelbaren flächigen Kontakt mit diesen Aggregaten aufweist und ein optimaler Wärmeübergang gewährleistet ist.

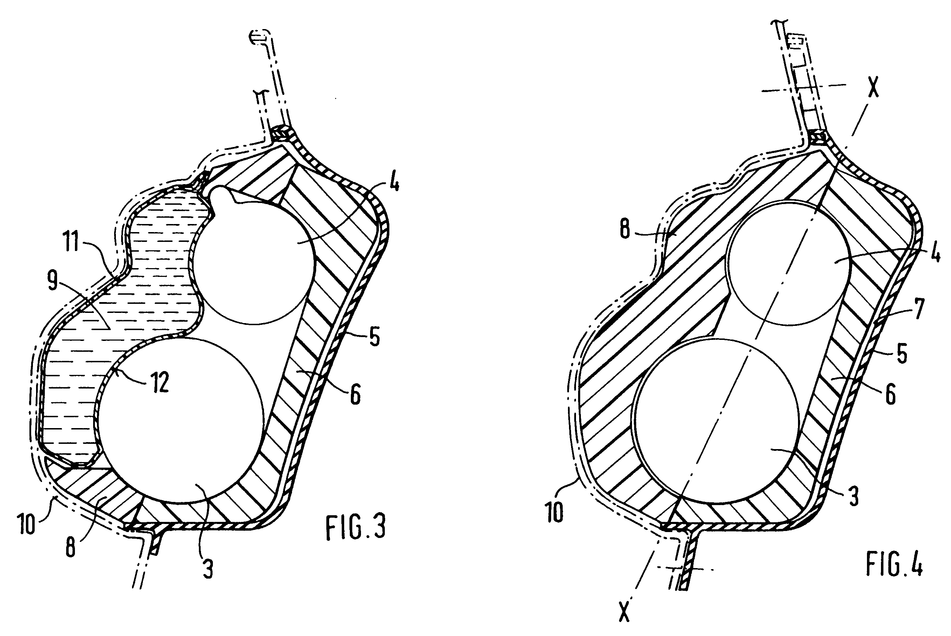

Das schalenförmige Behältnis 5 wird mit einer Aufbauwand 10 des Fahrzeugs verbunden, an die eine Wand 11 des Wärmespeichers 9 anliegend ist, wodurch zusätzlich Wärme abgeführt wird. Diese Wand 11 ist gegenüberstehend einer weiteren Wand 12 vorgesehen, welche mit den Gehäusen der Aggregate 2, 3 und 4 in Kontakt steht. Wie Fig. 4 näher zeigt, ist auch die Halbschale 8 dem Verlauf der Aufbauwand 10 angepasst.

Der Wärmespeicher 9 besteht vorzugsweise aus einem dünnwandigen Kunststoffbehälter, dessen Wände flexibel ausgeführt sind. Die den Aggregaten zugerichtete Wand 12 ist dicker ausgeführt als die gegenüberliegende Wand 11, um durch Reibung der Aggregate verursachten Abnutzungen entgegenzuwirken. Der Wärmespeicher 9 ist mit einer Flüssigkeit, bestehend aus einem Gemisch aus Wasser und Frostschutzmittel gefüllt.

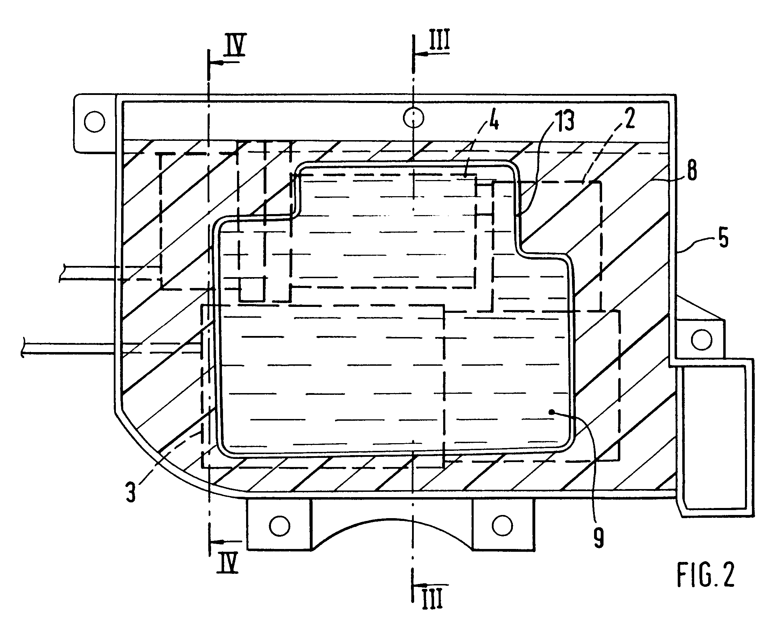

Die Halbschalen 6 und 8 umschließen die Einheit 1 rundum stirnseitig sowie oben- und unterseitig im Behältnis 5, wobei der Wärmespeicher 9 neben seiner Funktion als Wärmeabfuhrelement zusätzlich auch schallmindernd wirkt und hierzu paßgenau in eine Öffnung 13 der oberen Halbschale 8 eingefügt ist, wie Fig. 2 näher zeigt. Desweiteren zeigt Fig. 2 auch, daß der Wärmespeicher 9 hauptsächlich den die meiste Wärme verursachenden E-Motor 3 und den Lufttrockner 4 überdeckt, welche wesentliche Wärmequellen darstellen, so daß ein Wärmeübergang zum Druckluftkompressor 2 unterbunden wird. Eine weitere Erstreckung z.B. über die gesamte Einheit 1 ist ebenfalls möglich, zumal eine Schallminderung auch durch den Wärmespeicher erzielt wird.

## Patentansprüche

1. Vorrichtung zur Kühlung und Geräuschdämpfung einer Druckluftkompressoreinheit (1) für die Energieversorgung einer pneumatischen Niveauregelanlage eines Kraftfahrzeugs, die mehrere zu einer Baueinheit verbundene Aggregate, wie einen Elektromotor (3), einen Lufttrockner (4) sowie einen Druckkompressor (2) umfaßt, welche in einem im Fahrzeugaufbau gehaltenen Behältnis (5) angeordnet und von schallmindernden Schichten (6,8) umgeben sind, **dadurch gekennzeichnet,** daß die Kompressoreinheit (1) in schallmindernden Schichtelementen (6 und 8) eines schalenförmigen Behältnisses (5) eingebettet und von einem Wärmespeicher (9) abgedeckt ist, der in einem flächenhaften Kontakt zu den Aggregaten (2, 3 und 4) steht, und der in dem einen Schichtelement (8) angeordnet ist und zusammen mit dem weiteren Schichtelement(6)die Einheit (1) rundum kapselnd umschließt.

2. Vorrichtung nach Anspruch 1, **dadurch gekennzeichnet,** daß der Wärmespeicher (9) aus einem dünnwandigen Kunststoffbehälter besteht, dessen Wände (11, 12) flexibel ausgeführt sind und großflächig am Gehäuse des Lufttrockners (4) und des Motors (3) sowie an einer Aufbauwand (10) anliegen.

3. Vorrichtung nach den Ansprüchen 1 oder 2, **dadurch gekennzeichnet,** daß die Wände (11, 12) des Wärmespeichers (9) eine den Konturen der Gehäuse der Kompressoreinheit (1) und der Aufbauwand (10) folgende Formgebung aufweisen.

4. Vorrichtung nach den Ansprüchen 1, 2 oder 3, **dadurch gekennzeichnet,** daß die jeweils gegenüberliegenden Wände (11, 12) des Wärmespeichers (9) großflächig ausgeführt sind und einerseits den Gehäusen der Kompressoreinheit (1) und andererseits der Aufbauwand (10) zugerichtet sind.

5. Vorrichtung nach einem oder mehreren der vorhergehenden Ansprüche, **dadurch gekennzeichnet,** daß der Wärmespeicher (9) ein Flüssigkeitsgemisch aus Wasser und Frostschutzmittel beinhaltet.

6. Vorrichtung nach einem oder mehreren der vorhergehenden Ansprüche, **dadurch gekennzeichnet,** daß die eine schallmindernde Schicht (6) aus einer die Kompressoreinheit (1) im Behältnis (5) lagernden ersten Halbschale und die weitere Schicht (8) aus einer durch den Wärmespeicher (9) ergänzten zweiten Halbschale besteht.

## Claims

1. A device for cooling and sound-proofing a compressed-air compressor unit (1) for the energy supply of a pneumatic level-regulating device of a motor vehicle, comprising a plurality of units connected to form a structural unit, such as an electric motor (3), an air drier (4) and a pressure compressor (2) which are arranged in a container (5) held in the vehicle body and are surrounded by sound-proofing layers (6, 8), characterized in that the compressor unit (1) is embedded in sound-proofing layer members (6 and 8) of a shell-shaped container (5) and is covered by a heat accumulator (9) which is in surface contact with the units (2, 3 and 4) and which is arranged in one layer member (8) and together with the further layer member (6) encloses the unit (1) so as to encapsulate it.

2. A device according to Claim 1, characterized in that the heat accumulator (9) comprises a thin-walled plastics container, the walls (11, 12) of which are made flexible and rest with large surface areas on the housing of the air drier (4) and the motor (3) and on a wall (10) of the body.

3. A device according to Claim 1 or 2, characterized in that the walls (11, 12) of the heat accumulator (9) have a shape following the outlines of the housings of the compressor unit (1) and the wall (10) of the body.

4. A device according to Claim 1, 2 or 3, characterized in that the respectively opposite walls (11, 12) of the heat accumulator (9) are made with a large surface area and face the housings of the compressor unit (1) on one side and the wall (10) of the body on the other side.

5. A device according to one or more of the preceding Claims, characterized in that the heat accumulator (9) contains a liquid mixture of water and antifreeze.

6. A device according to one or more of the preceding Claims, characterized in that one sound-proofing layer (6) comprises a first half shell supporting the compressor unit (1) in the container (5) and the further layer (8) comprises a second half shell completed by the heat accumulator (9).

## Revendications

1. Dispositif de refroidissement et d'insonorisation d'une unité de compresseur d'air comprimé (1) pour alimenter en énergie une installation pneumatique de réglage de niveau d'un véhicule automobile, qui comprend plusieurs groupes assemblés en une unité de construction, tels qu'un moteur électrique (3), un séchoir d'air (4) ainsi qu'un compresseur (2), qui sont placés dans un conteneur (5) maintenu dans la carrosserie du véhicule et entourés par des couches (6, 8) amortissant le bruit, caractérisé en ce que l'unité de compresseur (1) est logée dans des éléments en couches (6 et 8) réduisant le bruit d'un conteneur (5) en forme de coquille et est recouverte par un accumulateur de chaleur (9) qui est en contact de surface avec les groupes (2, 3 et 4) et qui est placé dans un élément en couches (8) et qui avec l'autre élément en couches (6) entoure tout autour l'unité (1) en la blindant.

2. Dispositif selon la revendication 1, caractérisé en ce que l'accumulateur de chaleur (9) est constitué d'un réservoir en matière plastique à parois minces dont les parois (11, 12) sont flexibles et s'appliquent sur une grande surface sur le carter du séchoir d'air (4) et du moteur (3) ainsi que sur une paroi (10) de la carrosserie.

3. Dispositif selon les revendications 1 ou 2, caractérisé en ce que les parois (11, 12) de l'accumulateur de chaleur (9) présentent une forme qui suit les contours du carter de l'unité de compresseur (1) et de la paroi (10) de la carrosserie.

4. Dispositif selon les revendications 1, 2 ou 3, caractérisé en ce que les parois (11, 12) opposées l'une à l'autre de l'accumulateur de chaleur (9) présentent une grande surface et sont dirigées d'une part vers les carters de l'unité de compresseur (1) et d'autre part vers la paroi (10) de la carrosserie.

5. Dispositif selon une ou plusieurs des revendications précédentes, caractérisé en ce que l'accumulateur de chaleur (9) contient un mélange liquide d'eau et de produit antigel.

6. Dispositif selon une ou plusieurs des revendications précédentes, caractérisé en ce que l'une des couches (6) réduisant le bruit est constituée d'une première demi-coquille soutenant l'unité de compresseur (1) dans le conteneur (5) et l'autre couche (8) d'une seconde demi-coquille complétée par l'accumulateur de chaleur (9).
